# EUROPÄISCHE PATENTSCHRIFT

(11) **EP 2 006 564 B1**
(45) Veröffentlichungstag und Bekanntmachung des Hinweises auf die Patenterteilung: **06.03.2013**
(21) Anmeldenummer: 08011335.0
(22) Anmeldetag: 23.06.2008
(51) Int. Cl.: F16D 57/04

(54) **Hydrodynamische Maschine**
Hydrodynamic machine
Machine hydrodynamique

(30) Priorität: 23.06.2007 DE 102007029018
(43) Veröffentlichungstag der Anmeldung: 24.12.2008
(73) Patentinhaber: Voith Patent GmbH, 89522 Heidenheim (DE)
(72) Erfinder: Laukemann, Dieter, 74541 Vellberg (DE); Ohr, Thomas, 74564 Crailsheim (DE); Kämmerer, Steffen, Dr., 74564 Crailsheim (DE); Mayer, Andreas-Nicolas, 89160 Dornstadt (DE); Neher, Achim, 74564 Crailsheim (DE)
(74) Vertreter: Schmidt, Sven Hendrik

(56) Entgegenhaltungen:
- WO-A1-2004/026652
- DE-A1- 10 237 766
- DE-A1-102007 030 281
- US-A- 3 051 273

## Beschreibung

Die vorliegende Erfindung betrifft eine hydrodynamische Maschine, insbesondere einen hydrodynamischen Retarder, welche/welcher in einen externen Arbeitsmediumkreislauf eingebunden ist.

Hydrodynamische Maschinen mit einem externen Arbeitsmediumkreislauf unterscheiden sich von hydrodynamischen Maschinen ohne externen Kreislauf dadurch, dass das Arbeitsmedium nicht permanent innerhalb der hydrodynamischen Maschine verbleibt, beispielsweise entweder in dem Arbeitsraum oder einem in der hydrodynamischen Maschine vorgesehenen Vorratsraum - auch Verzögerungskammer genannt -, sondern aus einem externen Arbeitsmediumkreislauf, in welchem in der Regel ein Kühler für das Arbeitsmedium angeordnet ist, in die hydrodynamische Maschine beziehungsweise deren Arbeitsraum geleitet wird und anschließend wieder aus dem Arbeitsraum beziehungsweise der hydrodynamischen Maschine in den externen Arbeitsmediumkreislauf abgeführt wird. Dementsprechend weist die hydrodynamische Maschine wenigstens einen Arbeitsmediumeinlass und einen Arbeitsmediumauslass auf. Im Arbeitsmediumauslass oder in Strömungsrichtung dahinter ist beispielsweise ein Druckregelventil vorgesehen, mittels welchem der statische Druck im Arbeitsraum und damit der Füllungsgrad des Arbeitsraumes eingestellt wird.

Das Austragen von Arbeitsmedium aus dem Arbeitsraum und, beim Abschalten der hydrodynamischen Maschine, die Entleerung des Arbeitsraumes erfolgt über sogenannte Auslassbohrungen. Diese Auslassbohrungen sind über dem Umfang der hydrodynamischen Maschine verteilt (in Drehrichtung gesehen) in den Schaufeln beziehungsweise in den Zwischenräumen zwischen den Schaufeln, bei einem Retarder in der Regel des Stators, vorgesehen und münden einerseits im Arbeitsraum und andererseits in einem Ringkanal, der sich in Umfangsrichtung (Drehrichtung) der hydrodynamischen Maschine erstreckt. Der Ringkanal dient dem Sammeln des Arbeitsmediums, das heißt die Strömung von Arbeitsmedium aus den einzelnen Auslassbohrungen wird im Ringkanal zusammengeführt. Aus dem Ringkanal wird das Arbeitsmedium dann über den genannten Arbeitsmediumauslass, der mit Bezug auf die Strömungsrichtung in Reihe zu den Auslassbohrungen angeordnet ist, in den externen Arbeitsmediumkreislauf geleitet.

Ein Nachteil der bekannten Ausführungen besteht darin, dass sich die hydrodynamische Maschine, insbesondere wenn sie als Retarder ausgeführt ist und die Auslassbohrungen im Stator, das heißt in einem nicht umlaufenden Schaufelrad, vorgesehen sind, nicht selbst vollständig entleert, da insbesondere in einem teilgefüllten Zustand des Arbeitsraumes, das heißt, wenn nicht mehr die maximal mögliche Arbeitsmediummenge im Arbeitsraum vorhanden ist, die Druckverluste in der Arbeitsmediumströmung durch die Auslassbohrungen dies verhindern. In einem solchen teilgefüllten Zustand des Arbeitsraumes ist der Druck im Arbeitsraum geringer als im vollgefüllten Zustand.

US 3051273 offenbart eine Hydrodynamische Maschine mit mehreren Ein-und Auslässen. EP 160 8442 B1 offenbart eine Hydrodynamische Maschine gemäß dem Oberbegriff des Anspruchs 1.

Der vorliegenden Erfindung liegt die Aufgabe zugrunde, eine hydrodynamische Maschine anzugeben, bei welcher eine effektive und weitgehende Entleerung des Arbeitsraumes ermöglicht wird.

Die erfindungsgemäße Aufgabe wird durch eine hydrodynamische Maschine mit den Merkmalen von Anspruch 1 gelöst. In den abhängigen Ansprüchen sind vorteilhafte und besonders zweckmäßige Ausgestaltungen der Erfindung angegeben.

Im Einzelnen weist die erfindungsgemäße hydrodynamische Maschine, die insbesondere als Retarder, das heißt mit einem umlaufenden Schaufelrad und einem stationären Schaufelrad ausgeführt ist, und welche in einen externen Arbeitsmediumkreislauf eingebunden ist, beispielsweise den Motorkühlkreislauf eines Kraftfahrzeugs, ein beschaufeltes Primärrad und ein beschaufeltes Sekundärrad auf, welche miteinander einen torusförmigen Arbeitsraum ausbilden, der mit Arbeitsmedium aus dem externen Arbeitsmediumkreislauf befüllbar ist, wobei das Arbeitsmedium aus dem Arbeitsraum der hydrodynamischen Maschine wieder zurück in den externen Kreislauf geleitet wird.

In der hydrodynamischen Maschine ist außerhalb des Arbeitsraumes ein Ringkanal vorgesehen, der insbesondere in Axialrichtung gesehen unmittelbar hinter dem Arbeitsraum auf demselben Durchmesser wie der Arbeitsraum angeordnet ist, und welcher über Auslassbohrungen in einem der beiden Schaufelräder, bei einem Retarder insbesondere im Stator, arbeitsmediumleitend mit dem Arbeitsraum verbunden ist, um das Arbeitsmedium, welches durch die Auslassbohrungen aus dem Arbeitsraum austritt, zu sammeln und anschließend durch einen Arbeitsmediumauslass in den externen Kreislauf zu leiten. Die Vielzahl von Auslassbohrungen sind hinsichtlich der Arbeitsmediumströmung und insbesondere auch geometrisch parallel zueinander angeordnet und beispielsweise an mehreren oder allen Schaufelzwischenräumen, in Umfangsrichtung gesehen, in einem beschaufelten Rad, insbesondere im Stator eines Retarders, angeordnet.

Erfindungsgemäß ist hinsichtlich der Arbeitsmediumströmung parallel zu den Auslassbohrungen wenigstens ein zusätzlicher Arbeitsmediumauslass vorgesehen, insbesondere ein einziger zusätzlicher Arbeitsmediumauslass, welcher ebenfalls im Arbeitsraum mündet, in der Regel unmittelbar, und welcher zugleich unmittelbar oder mittelbar im externen Arbeitsmediumkreislauf mündet. Aufgrund dessen, dass dieser zusätzliche Arbeitsmediumauslass den Ringkanal sozusagen umgeht beziehungsweise parallel zu diesem angeordnet ist, kann in diesem der Druckverlust in der Strömung, welcher beim Strömen des Arbeitsmediums durch die Auslassbohrungen und insbesondere beim Einströmen des Arbeitsmediums aus den Auslassbohrungen in den Ringkanal, welcher einen wesentlichen größeren Querschnitt aufweist als die einzelnen Auslassbohrungen, vermieden werden, so dass eine viel leichtere Entleerung des Arbeitsraumes und damit eine weitgehendere Entleerung unabhängig von einem niedrigen Arbeitsmediumdruck im Arbeitsraum erreicht werden kann. Durch die Parallelschaltung der Auslassbohrungen und des zusätzlichen Arbeitsmediumauslasses findet ein gleichzeitiges Ausströmen von Arbeitsmedium aus dem Arbeitsraum über die Auslassbohrungen und den wenigstens einen zusätzlichen Arbeitsmediumauslass statt. Es ist demnach keine Regeleinrichtung vorgesehen, welche den Arbeitsmediumstrom wahlweise auf die Auslassbohrungen oder den zusätzlichen Arbeitsmediumauslass leitet. Dies bedeutet jedoch nicht, dass in bestimmten Betriebssituationen insbesondere der zusätzliche Arbeitsmediumauslass gezielt versperrt werden kann, beispielsweise im normalen Betriebszustand der hydrodynamischen Maschine, das heißt wenn der Arbeitsraum nicht entleert werden soll.

Besonders vorteilhaft weist der zusätzliche Arbeitsmediumauslass über seiner gesamten Länge einen im Wesentlichen konstanten oder vollständig konstanten Strömungsquerschnitt auf. Dies kann beispielsweise dadurch erreicht werden, dass der zusätzliche Arbeitsmediumauslass ebenfalls als Bohrung ausgeführt ist, beispielsweise zunächst durch das beschaufelte Rad - Primärrad oder Sekundärrad, insbesondere Stator -, welches mit den Auslassbohrungen versehen ist, und anschließend durch ein Gehäuse, welches dieses beschaufelte Rad umschließt.

Der zusätzliche Arbeitsmediumauslass kann unmittelbar im externen Arbeitsmediumkreislauf münden, wobei insbesondere in der Mündung beziehungsweise am Ende des zusätzlichen Arbeitsmediumauslasses ein Rückschlagventil vorgesehen ist. Alternativ oder zusätzlich kann der zusätzliche Arbeitsmediumauslass mit der Saugseite einer Pumpe verbunden sein, welche den Arbeitsraum immer dann, wenn die hydrodynamische Maschine außer Betrieb genommen wird beziehungsweise außer Betrieb gehalten wird, von Arbeitsmedium leersaugt. Diese Pumpe ist vorteilhaft in der hydrodynamischen Maschine integriert, beispielsweise in Form eines Pumpenlaufrads, das in der hydrodynamischen Maschine umläuft, insbesondere zusammen mit einem der beiden beschaufelten Räder. Das Pumpenlaufrad kann beispielsweise mit einem in Umfangsrichtung beziehungsweise Drehrichtung der hydrodynamischen Maschine verlaufenden Kanal zusammenarbeiten, um die Pumpwirkung auf das Arbeitsmedium aus dem Arbeitsraum zu erzeugen. Insbesondere steht das Pumpenlaufrad dem Kanal derart gegenüber, dass in dem Kanal eine Strömung von Arbeitsmedium in Drehrichtung des Pumpenlaufrads beziehungsweise der hydrodynamischen Maschine erzeugt wird, insbesondere von einem im Kanal vorgesehenen Einlass für Arbeitsmedium bis zu einem im Kanal vorgesehenen Auslass für Arbeitsmedium. Dieser Einlass ist dann mit dem zusätzlichen Arbeitsmediumauslass verbunden, und der Auslass ist mit dem externen Arbeitsmediumkreislauf verbunden. Eine solche Pumpe wird auch als Seitenkanalpumpe bezeichnet.

Das Pumpenlaufrad kann insbesondere mittels einem Wälzlager und/oder mittels einem Gleitlager in der hydrodynamischen Maschine gelagert sein. Das Lager wird vorteilhaft mit dem Arbeitsmedium geschmiert, um ein Trockenlaufen zu verhindern. Hierzu wird besonders vorteilhaft eben jener Arbeitsmediumstrom verwendet, der mittels des Pumpenlaufrads permanent aus dem Arbeitsraum abgepumpt wird; auch unabhängig davon, ob das Abpumpen über den zusätzlichen Arbeitsmediumauslass erfolgt oder über eine andere arbeitsmediumleitende Verbindung. Dafür kann beispielsweise ein Schmiermittelkanal vorgesehen sein, der mit der Druckseite der Pumpe verbunden ist und so das aus dem Arbeitsraum mittels der Pumpe abgepumpte Arbeitsmedium in das Lager zur Schmierung desselben leitet.

Selbstverständlich ist es auch möglich, eine Pumpe außerhalb der hydrodynamischen Maschine vorzusehen, um den Arbeitsraum über den zusätzlichen Arbeitsmediumauslass leer zu pumpen. Diese Pumpe kann in einer Ausführungsform eine ohnehin im Kraftfahrzeug vorgesehene Pumpe sein, beispielsweise die Kühlwasserpumpe das Kraftfahrzeugkühlkreislaufes, wenn die hydrodynamische Maschine mit Kühlwasser als Arbeitsmedium betrieben wird. Auch Ölpumpen, die für ein Schaltgetriebe beziehungsweise Wechselgetriebe vorgesehen sind, kommen in Betracht, wenn als Arbeitsmedium Öl verwendet wird.

Die Auslassbohrungen, über welche das Arbeitsmedium in den Ringkanal strömt, können im Wesentlichen in Axialrichtung der hydrodynamischen Maschine verlaufen, insbesondere mit einem vorgegebenen Abstand zu dem äußeren Umfang des Arbeitsraums. Der zusätzliche Arbeitsmediumauslass ist insbesondere winklig zu den Auslassbohrungen angeordnet. Insbesondere verläuft er bezogen auf den Querschnitt des Arbeitsraumes in einem Axialschnitt durch die hydrodynamische Maschine in Radialrichtung. Auch bezogen auf den Querschnitt der gesamten hydrodynamischen Maschine in einem Axialschnitt durch die hydrodynamische Maschine kann der zusätzliche Arbeitsmediumauslass vollständig oder teilweise in Radialrichtung verlaufen, insbesondere winklig zu einer Senkrechten auf der Drehachse der hydrodynamischen Maschine.

Insbesondere wenn der zusätzliche Arbeitsmediumauslass als Bohrung ausgeführt ist, ist er vorteilhaft vollständig linear über seiner gesamten Länge. Selbstverständlich sind andere Formen, beispielsweise zusammengesetzt aus einer Vielzahl von linearen Abschnitten, die winklig zueinander stehen, vorstellbar.

Der zusätzliche Arbeitsmediumauslass mündet vorteilhaft auf demselben Durchmesser beziehungsweise im Bereich desselben Durchmessers wie die Auslassbohrungen im Arbeitsraum der hydrodynamischen Maschine. Durch die Position der Mündung kann ein bestimmter Kennlinienverlauf der hydrodynamischen Maschine im Betrieb eingestellt werden.

Die Erfindung soll nachfolgend anhand von Ausführungsbeispielen und den Figuren exemplarisch erläutert werden.

Es zeigen:
- Figur 1: einen Axialschnitt durch eine vorteilhafte Ausführung der Erfindung in Form eines hydrodynamischen Retarders mit einem zusätzlichen Arbeitsmediumauslass im Stator;
- Figur 2: eine Pumpe zum Absaugen von Arbeitsmedium beziehungsweise Restarbeitsmedium aus dem Arbeitsraum einer hydrodynamischen Maschine, wobei das Lager des Pumpenlaufrads ausschließlich mit Arbeitsmedium geschmiert wird;
- Figur 3: eine Möglichkeit des Anschlusses des Ringkanals und des wenigstens einen oder insbesondere genau einen zusätzlichen Arbeitsmediumauslasses an den externen Kreislauf.

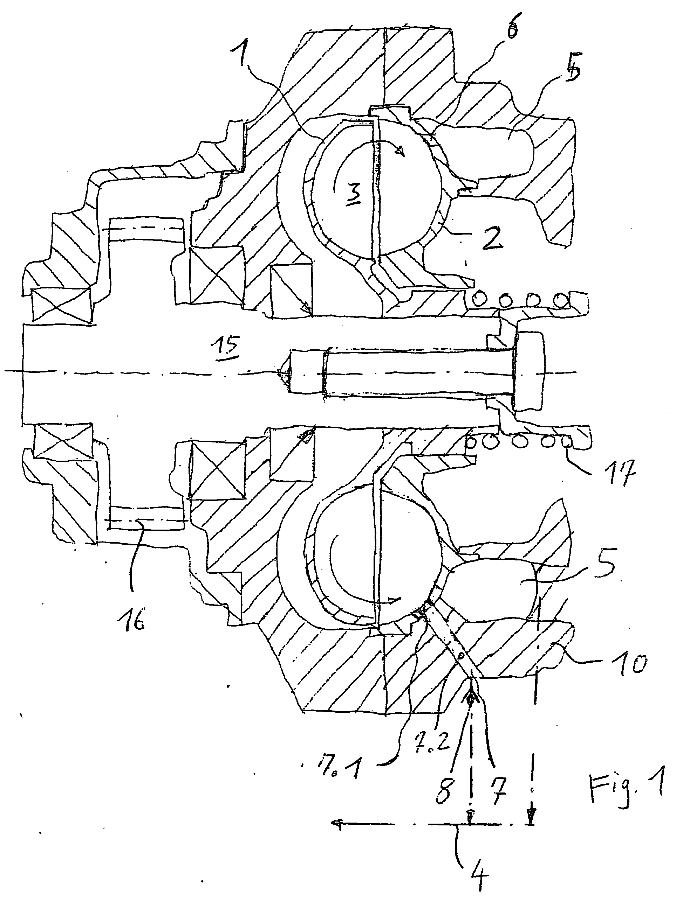

In der Figur 1 erkennt man eine hydrodynamische Maschine, hier einen Retarder, mit einem Sekundärrad 2 (Stator) und einem Primärrad 1. Sekundärrad 2 und Primärrad 1, welche jeweils mit einer Beschaufelung versehen sind und sich in Axialrichtung der hydrodynamischen Maschine gegenüberstehen, bilden gemeinsam einen torusförmigen Arbeitsraum 3 aus, in welchem im befüllten oder teilbefüllten Zustand ein Arbeitsmediumkreislauf ausgebildet wird, siehe den Pfeil, so dass Drehmoment vom umlaufenden Primärrad 1 auf das stillstehende Sekundärrad 2 übertragen wird und dadurch ein Bremsmoment auf das Primärrad 1 ausgeübt wird. Zum Antreiben des Primärrads 1 dient eine Eingangswelle 15 mit einem darauf montierten oder einstückig mit der Welle ausgeführten Ritzel 16.

Im Betrieb der hydrodynamischen Maschine, das heißt vorliegend im Bremsbetrieb des Retarders, findet ein ständiger Arbeitsmediumaustausch zwischen dem Arbeitsraum 3 und einem externen Arbeitsmediumkreislauf 4 statt. Der externe Arbeitsmediumkreislauf 4 ist hier nur schematisch dargestellt, und zwar nur jener Teil, der sich in Strömungsrichtung gesehen unmittelbar hinter der hydrodynamischen Maschine anschließt. In dem externen Arbeitsmediumkreislauf 4, der beispielsweise Teil eines Fahrzeugmotorkühlkreislaufs sein kann, ist in der Regel ein Kühler zum Kühlen des im Arbeitsraum 3 erwärmten Arbeitsmediums vorgesehen. Das Arbeitsmedium kann demnach Wasser beziehungsweise ein Wassergemisch oder bei einer anderen Ausführungsform auch Öl sein.

Das Arbeitsmedium gelangt während des Betriebszustands der hydrodynamischen Maschine und beim Übergang vom Betriebszustand in den Nichtbetriebszustand aus dem Arbeitsraum 3 über eine Vielzahl von Auslassbohrungen 6 im Sekundärrad 2, hier dem Stator, in einen sich in einer Kreisringform über dem Umfang der hydrodynamischen Maschine erstreckenden Ringkanal 5 und von dort in den externen Arbeitsmediumkreislauf 4. Hierbei tritt ein gewisser Druckverlust in der Arbeitsmediumströmung insbesondere beim Austritt des Arbeitsmediums aus den Auslassbohrungen 6 in den Ringkanal 5 auf, da hier eine sprunghafte Erweiterung des Strömungsquerschnitts vorliegt. Dieser Druckverlust führt dazu, dass insbesondere bei vergleichsweise geringen Drücken im Arbeitsraum 3 eine vollständige Entleerung des Arbeitsraumes 3 im Nichtbetriebszustand (Nichtbremsbetrieb) beziehungsweise beim Übergang vom Betriebszustand (Bremsbetrieb) in den Nichtbetriebszustand (Nichtbremsbetrieb) verhindert wird.

Das im Arbeitsraum 3 unerwünscht verbleibende Arbeitsmedium führt dazu, dass auch im Nichtbetriebszustand (Nichtbremsbetrieb) ein Restdrehmoment vom Primärrad 1 auf das Sekundärrad 2 übertragen wird, was zu einem unerwünschten Leistungsverlust im Antriebsstrang, beispielsweise Kraftfahrzeugantriebsstrang, in welchen die hydrodynamische Maschine eingebunden ist, führt. Als eine erste Maßnahme, um diesen Leistungsverlust zu vermindern, ist daher vorgesehen, das Primärrad 1 im Nichtbetriebszustand der hydrodynamischen Maschine in Axialrichtung vom Sekundärrad 2 abzufahren, siehe die Druckfeder 17, welche dieses Abfahren bewirkt.

Um eine bessere Entleerung des Arbeitsraumes 3 zu ermöglichen, ist ferner in Strömungsrichtung parallel zu den Auslassbohrungen 6 beziehungsweise dem Ringkanal 5 ein zusätzlicher Arbeitsmediumauslass 7 vorgesehen, über welchen Arbeitsmedium aus dem Arbeitsraum 3 in den externen Kreislauf 4 geleitet wird. Dieser zusätzliche Arbeitsmediumauslass 7 setzt sich zusammen aus einer Bohrung 7.1 durch das Sekundärrad 2 beziehungsweise durch die Schale des Sekundärrads 2 und einer sich anschließenden Bohrung 7.2 durch das Gehäuse 10 der hydrodynamischen Maschine, welches das Sekundärrad 2 und insbesondere zugleich das Primärrad 1 umschließt. Selbstverständlich ist es auch möglich, das Gehäuse 10 einteilig mit dem Sekundärrad 2 auszuführen, so dass sich die Bohrung des zusätzlichen Arbeitsmediumauslasses 7 nur durch ein Bauteil erstrecken müsste.

Wie man sieht, weist der zusätzliche Arbeitsmediumauslass 7 über seiner gesamten Länge denselben Strömungsquerschnitt auf. Hierdurch können Druckverluste vermindert werden, da sämtliche Stoßverluste entfallen.

Die zusätzliche Auslassbohrung 7 kann unmittelbar mit dem externen Arbeitsmediumkreislauf 4 verbunden sein beziehungsweise unmittelbar in diesem münden. Insbesondere ist am Austritt des zusätzlichen Arbeitsmediumauslasses 7 beziehungsweise im externen Kreislauf 4 hinter dem zusätzlichen Arbeitsmediumauslass 7 ein Rückschlagventil 8 vorgesehen, um einen Rückfluss von Arbeitsmedium aus dem externen Kreislauf 4 in den zusätzlichen Arbeitsmediumauslass beziehungsweise den Arbeitsraum 3 zu vermeiden.

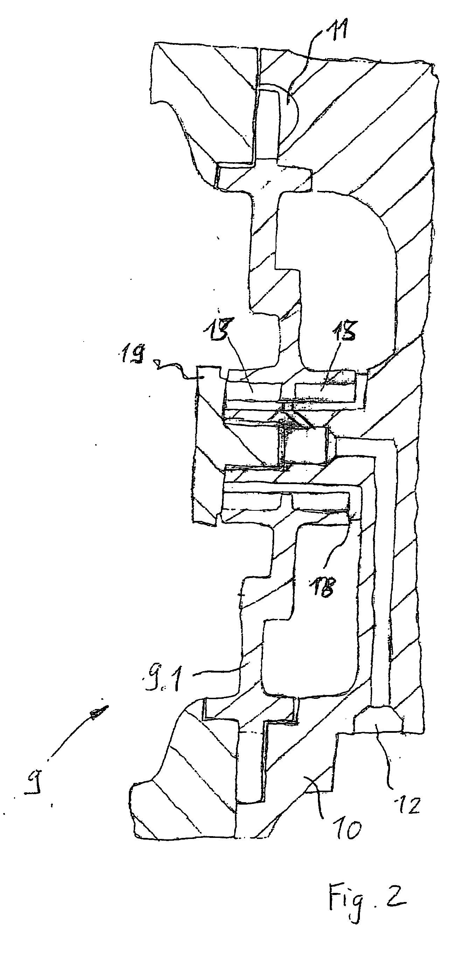

Zur vollständigen Entleerung des Kreislaufs kann auch eine Pumpe im externen Kreislauf 4 oder in der hydrodynamischen Maschine selbst vorgesehen sein, deren Saugseite mit dem Arbeitsmediumkreislauf 3 verbunden ist. In der Figur 2 ist eine solche in der hydrodynamischen Maschine integrierte Pumpe schematisch dargestellt. Die Saugseite der Pumpe 9 kann insbesondere mit dem zusätzlichen Arbeitsmediumauslass 7 (siehe Figur 1) verbunden sein, um sowohl den Vorteil des verringerten Druckverlustes durch Vorsehen des zusätzlichen Arbeitsmediumauslasses zu nutzen als auch zusätzlich den Arbeitsraum 3 aktiv leerzupumpen. Grundsätzlich ist es jedoch auch möglich, eine in der hydrodynamischen Maschine integrierte Pumpe 9, wie sie in der Figur 2 dargestellt ist, unabhängig von einem oder mehreren zusätzlichen Arbeitsmediumauslässen zu verwenden, beispielsweise indem deren Saugseite mit dem Ringkanal 5 (siehe die Figur 1) verbunden ist.

Gemäß der Figur 2 weist die Pumpe 9 ein Pumpenlaufrad 9.1 auf, das einem im Gehäuse 10 der hydrodynamischen Maschine in Umfangsrichtung verlaufenden Kanal 11 derart gegenübersteht, dass beim Umlaufen des Pumpenlaufrads 9.1 eine Förderwirkung in dem Kanal 11 erzeugt wird, und zwar von einem Einlass (nicht dargestellt) desselben bis zu einem Auslass (nicht dargestellt) desselben. Der Kanal 11 ist in Umfangsrichtung durchgehend bis auf eine Unterbrechung, vor welcher der Auslass und hinter welcher der Einlass positioniert ist, ausgeführt. Diese Unterbrechung erkennt man aus der Darstellung im unteren Bereich der Figur 2.

Wenn die erfindungsgemäße Ausführung gemäß der Figur 2 mit einer erfindungsgemäßen Ausführung gemäß der Figur 1 kombiniert wird, so wird der Einlass des Kanals 11 mit dem zusätzlichen Arbeitsmediumauslass 7 verbunden und der Auslass des Kanals 11 mit dem externen Arbeitsmediumkreislauf 4. Wenn die Ausführung gemäß der Figur 2 ohne den zusätzlichen Arbeitsmediumauslass 7 gemäß der Figur 1 ausgeführt wird, kann der Einlass des Kanals 11 beispielsweise mit dem Ringkanal 5 verbunden werden.

Das Pumpenlaufrad 9.1 ist gemäß der Figur 2 mittels einem Gleitlager 13 gelagert. In der gezeigten Ausführung ist ferner ein Kanal 12 im Gehäuse 10 vorgesehen, über welchen Schmiermittel in das Gleitlager 13, das heißt zwischen die sich mit verschiedener Drehzahl drehenden Bauteile beziehungsweise ein drehendes und ein stehendes Bauteil geleitet wird. Vorliegend erfolgt die Schmierung des Gleitlagers 13 mit Arbeitsmedium, das heißt der Kanal 12 wird vorteilhaft mit der Druckseite der Pumpe 9 verbunden.

Als weitere Details, die nur in vorteilhaften Ausführungsformen vorgesehen werden, erkennt man in der Figur 2 eine Lagerbuchse 18 aus einem harten Werkstoff, beispielsweise Kohle und/oder Graphit, als harte Gegenlauffläche in Axialrichtung und Radialrichtung für das Pumpenlaufrad 9.1. Ferner ist eine Lagerschraube 19 vorgesehen, welche das Lager zusammenhält und zugleich Gegenlauffläche für das Axiallager in entgegengesetzter Axialrichtung wie die Lagerbuchse 18 ist.

Dadurch, dass Restarbeitsmedium auch im Nichtbetriebszustand aus dem Arbeitsraum der hydrodynamischen Maschine gepumpt wird, ist eine ständige Beaufschlagung des Lagers, hier des Gleitlagers 13 mit Schmiermittel gewährleistet.

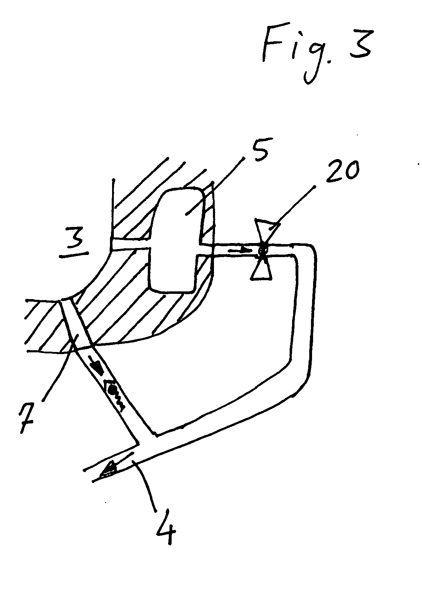

In der Figur 3 ist schematisch ein möglicher Anschluss des zusätzlichen Arbeitsmediumauslasses 7 sowie des Ringkanals 5 an den externen Kreislauf 4 dargestellt. So ist in Strömungsrichtung des Arbeitsmediums hinter dem Ringkanal 5, insbesondere an einem Austritt aus der hydrodynamischen Maschine beziehungsweise im externen Kreislauf 4 ein Regelventil 20 vorgesehen, um den Füllungsgrad des Arbeitsraumes 3 mit Arbeitsmedium zu steuern oder zu regeln. Der Anschluss des zusätzlichen Arbeitsmediumauslasses 7 mündet in Strömungsrichtung des Arbeitsmediums gesehen hinter dem Regelventil 20 im externen Kreislauf 4. Dadurch ist es möglich, beim Entleeren des Arbeitsraumes 3 den Nachteil eines Strömungsverlustes des Arbeitsmediums im Regelventil 20 und damit eines vergleichsweise höheren Druckes vor dem Regelventil 20 zu kompensieren.

Wie dargestellt, kann im Anschluss des zusätzlichen Auslasses 7 an den externen Kreislauf 4 ein Rückschlagventil vorgesehen sein. Dies ist jedoch nicht zwingend notwendig und es kommen, wie zuvor erläutert, auch andere Verbindungen oder Steuerorgane in Betracht.

## Patentansprüche

1. Hydrodynamische Maschine, insbesondere Retarder, mit einem externen Arbeitsmediumkreislauf (4), umfassend
1.1 ein beschaufeltes Primärrad (1) und ein beschaufeltes Sekundärrad (2), die miteinander einen torusförmigen Arbeitsraum (3) ausbilden, der mit Arbeitsmedium aus dem externen Arbeitsmediumkreislauf (4) befüllbar ist, welches wieder zurück in den externen Arbeitsmediumkreislauf (4) geleitet wird;
1.2 einen außerhalb des Arbeitsraums (3) angeordneten Ringkanal (5), der über Auslassbohrungen (6) im Primärrad (1) oder Sekundärrad (2) arbeitsmediumleitend mit dem Arbeitsraum (3) verbunden ist und in einer strömungsleitenden Verbindung mit dem externen Arbeitsmediumkreislauf (4) steht, um aus dem Arbeitsraum (3) durch die Auslassbohrungen (6) austretendes Arbeitsmedium zu sammeln und dem externen Arbeitsmediumkreislauf (4) zuzuleiten;
**dadurch gekennzeichnet, dass**
1.3 wenigstens ein zusätzlicher Arbeitsmediumauslass (7) vorgesehen ist, der im Arbeitsraum mündet und im externen Arbeitsmediumkreislauf (4) mündet und hinsichtlich der Arbeitsmediumströmung parallel zu den Auslassbohrungen (6) und dem Ringkanal (5) angeordnet ist, wobei der zusätzliche Arbeitsmediumauslass (7), die Auslassbohrungen (6) und der Ringkanal (5) gleichzeitig für die Arbeitsmediumströmung geöffnet sind, so dass sich die Arbeitsmediumströmung auf den zusätzlichen Arbeitsmediumauslass (7) und über die Auslassbohrungen (6) auf den Ringkanal (5) aufteilt.

2. Hydrodynamische Maschine gemäß Anspruch 1, **dadurch gekennzeichnet, dass** der zusätzliche Arbeitsmediumauslass (7) über seiner gesamten Länge einen zumindest im wesentlichen konstanten Strömungsquerschnitt aufweist, oder einen sich stetig erweiternden Strömungsquerschnitt frei von Sprungstellen.

3. Hydrodynamische Maschine gemäß einem der Ansprüche 1 oder 2, **dadurch gekennzeichnet, dass** der zusätzliche Arbeitsmediumauslass (7) über ein Rückschlagventil (8) unmittelbar im externen Arbeitsmediumkreislauf (4) mündet.

4. Hydrodynamische Maschine gemäß einem der Ansprüche 1 bis 3, **dadurch gekennzeichnet, dass** der zusätzliche Arbeitsmediumauslass (7) mit der Saugseite einer insbesondere in der hydrodynamischen Maschine integrierten Pumpe (9) verbunden ist, und die Pumpe (9) das Arbeitsmedium aus dem zusätzlichen Arbeitsmediumauslass (7) in den externen Arbeitsmediumkreislauf (4) pumpt.

5. Hydrodynamische Maschine gemäß Anspruch 4, **dadurch gekennzeichnet, dass** die hydrodynamische Maschine ein das Primärrad (1) und/oder das Sekundärrad (2) umschließendes Gehäuse (10) aufweist, die Pumpe (9) ein beschaufeltes Pumpenlaufrad (9.1) aufweist, das einem im Gehäuse (10) in Drehrichtung der hydrodynamischen Maschine verlaufenden Kanal (11) gegenübersteht, um in dem Kanal (11) eine Strömung in Drehrichtung zu erzeugen, und der Kanal (11) einen Einlass für Arbeitsmedium aufweist, der mit dem zusätzlichen Arbeitsmediumauslass (7) verbunden ist, und ferner einen Auslass aufweist, der mit dem externen Arbeitsmediumkreislauf (4) verbunden ist.

6. Hydrodynamische Maschine gemäß Anspruch 5, **dadurch gekennzeichnet, dass** das Pumpenlaufrad (9.1) mittels einem Wälzlager und/oder Gleitlager (13) gelagert ist, das mit dem Arbeitsmedium geschmiert wird.

7. Hydrodynamische Maschine gemäß Anspruch 6, **dadurch gekennzeichnet, dass** für das Lager (13) ein Schmiermittelkanal (14) vorgesehen ist, der mit der Druckseite der Pumpe (9) verbunden ist, so dass aus dem Arbeitsraum (3) mittels der Pumpe (9) abgepumptes Arbeitsmedium in das Lager (13) zur Schmierung desselben gepumpt wird.

8. Hydrodynamische Maschine gemäß einem der Ansprüche 1 bis 7, **dadurch gekennzeichnet, dass** die Auslassbohrungen (6) im Wesentlichen in Axialrichtung der hydrodynamischen Maschine verlaufen, und der zusätzliche Arbeitsmediumauslass (7) winklig hierzu ausgerichtet ist und insbesondere im Wesentlichen in Radialrichtung nach außen verläuft.

9. Hydrodynamische Maschine gemäß einem der Ansprüche 1 bis 8, **dadurch gekennzeichnet, dass** der zusätzliche Arbeitsmediumauslass (7) im Bereich desselben Durchmessers oder auf demselben Durchmesser der hydrodynamischen Maschine wie die Auslassbohrungen (6) im Arbeitsraum (3) mündet.

10. Hydrodynamische Maschine gemäß einem der Ansprüche 1 bis 9, **dadurch gekennzeichnet, dass** der Ringkanal (5) in Axialrichtung der hydrodynamischen Maschine neben dem Arbeitsraum (3) angeordnet ist, insbesondere in demselben Durchmesserbereich wie der Arbeitsraum (3).

## Claims

1. A hydrodynamic machine, especially a retarder, comprising an external working medium circuit (4), comprising
1.1 a bladed primary wheel (1) and a bladed secondary wheel (2) which together form a toroidal working chamber (3) which can be filled with working medium from the external working medium circuit (4), which is fed back into the external working medium circuit (4);
1.2 an annular channel (5) disposed outside the working chamber (3), which is connected in a working-medium conducting manner to the working chamber (3) via outlet holes (6) in the primary wheel (1) or secondary wheel (2), and is in flow-conducting communication with the external working medium circuit (4) in order to collect working medium leaving the working chamber (3) through the outlet holes (6) and to supply said medium to the external working medium circuit (4);
**characterized in that**
1.3 at least one additional working medium outlet (7) is provided which opens into the working chamber and opens into the external working medium circuit (4), and is arranged with respect to the working medium flow parallel to the outlet holes (6) and the annular channel (5), with the additional working medium outlet (7), the outlet holes (6) and the annular channel (5) simultaneously being opened for the working medium flow, so that the working medium flow will divide between the additional working medium outlet (7) and the annular channel (5) via the outlet holes (6).

2. A hydrodynamic machine according to claim 1, **characterized in that** the additional working medium outlet (7) has a substantially constant flow cross-section over its entire length, or a continuously expanding flow cross-section which is free from any discontinuities.

3. A hydrodynamic machine according to one of the claims 1 or 2, **characterized in that** the additional working medium outlet (7) opens directly into the external working medium circuit (4) via a non-return valve (8).

4. A hydrodynamic machine according to one of the claims 1 to 3, **characterized in that** the additional working medium outlet (7) is connected to the suction side of a pump (9) which is especially integrated in the hydrodynamic machine, and the pump (9) pumps the working medium from the additional working medium outlet (7) into the external working medium circuit (4).

5. A hydrodynamic machine according to claim 4, **characterized in that** the hydrodynamic machine comprises a housing (10) enclosing the primary wheel (1) and/or the secondary wheel (2), the pump (9) comprises a bladed pump impeller (9.1) which is opposite of a channel (11) extending in the housing (10) in the rotational direction of the hydrodynamic machine in order to generate a flow in the rotational direction in the channel (11), and the channel (11) comprises an inlet for working medium which is connected to the additional working medium outlet (7), and further comprises an outlet which is connected to the external working medium circuit (4).

6. A hydrodynamic machine according to claim 5, **characterized in that** the pump impeller (9.1) is mounted by means of a rolling bearing and/or a sliding bearing (13) which is lubricated with the working medium.

7. A hydrodynamic machine according to claim 6, **characterized in that** a lubricant channel (14) is provided for the bearing (13), said lubricant channel being connected to the pressure side of the pump (9), so that working medium pumped from the working chamber (3) by means of the pump (9) will be pumped into the bearing (13) for the lubrication thereof.

8. A hydrodynamic machine according to one of the claims 1 or 7, **characterized in that** the outlet holes (6) extend substantially in the axial direction of the hydrodynamic machine and the additional working medium outlet (7) is arranged at an angle thereto, and especially extends substantially in the radial direction to the outside.

9. A hydrodynamic machine according to one of the claims 1 or 8, **characterized in that** the additional working medium outlet (7) opens into the working chamber (3) in the region of the same diameter or on the same diameter of the hydrodynamic machine as the outlet holes (6).

10. A hydrodynamic machine according to one of the claims 1 or 9, **characterized in that** the annular channel (5) is arranged in the axial direction of the hydrodynamic machine adjacent to the working chamber (3), especially in the same diameter range as the working chamber (3).

## Revendications

1. Machine hydrodynamique, en particulier retardateur, avec un circuit externe de fluide de travail (4), comprenant
1.1 une roue primaire (1) à aubes et une roue secondaire (2) à aubes, qui forment ensemble un espace de travail (3) toroïdal pouvant être rempli de fluide de travail provenant du circuit externe de fluide de travail (4) et renvoyé au circuit externe de fluide de travail (4) ;
1.2 un canal annulaire (5) disposé à l'extérieur de L'espace de travail (3), qui est relié à l'espace de travail (3) par des alésages de sortie (6) dans la roue primaire (1) ou la roue secondaire (2) de façon à acheminer le fluide de travail et qui communique de façon à acheminer l'écoulement avec le circuit externe de fluide de travail (4), afin de collecter le fluide de travail sortant de l'espace de travail (3) par les alésages de sortie (6) et de l'amener vers le circuit externe de fluide de travail (4) ;
**caractérisée en ce que**
1.3 il est prévu au moins une sortie de fluide de travail supplémentaire (7) qui débouche dans l'espace de travail et débouche dans le circuit externe de fluide de travail (4) et qui est disposée, en ce qui concerne l'écoulement du fluide de travail, parallèlement aux alésages de sortie (6) et au canal annulaire (5), la sortie de fluide de travail supplémentaire (7), les alésages de sortie (6) et le canal annulaire (5) étant ouverts simultanément pour l'écoulement du fluide de travail, de sorte que l'écoulement du fluide de travail se répartit entre la sortie de fluide de travail supplémentaire (7) et, en passant par les alésages de sortie (6), le canal annulaire (5).

2. Machine hydrodynamique selon la revendication 1, **caractérisée en ce que** la sortie de fluide de travail supplémentaire (7) présente sur toute sa longueur une section d'écoulement au moins sensiblement constante ou une section d'écoulement qui s'élargit de façon continue et ne présente aucun décrochement.

3. Machine hydrodynamique selon l'une des revendications 1 ou 2, **caractérisée en ce que** la sortie de fluide de travail supplémentaire (7) débouche directement dans le circuit externe de fluide de travail (4) par l'intermédiaire d'un clapet antiretour (8).

4. Machine hydrodynamique selon l'une des revendications 1 à 3, **caractérisée en ce que** la sortie de fluide de travail supplémentaire (7) est reliée au côté d'aspiration d'une pompe (9), en particulier intégrée dans la machine hydrodynamique, et la pompe (9) pompe le fluide de travail de la sortie de fluide de travail supplémentaire (7) vers le circuit externe de fluide de travail (4).

5. Machine hydrodynamique selon la revendication 4, **caractérisée en ce que** la machine hydrodynamique présente un corps (10) renfermant la roue primaire (1) et/ou la roue secondaire (2), la pompe (9) présente une roue de pompe (9.1) à aubes qui fait face à un canal (11) orienté dans le corps (10) dans le sens de rotation de la machine hydrodynamique afin de créer dans le canal (11) un écoulement dans le sens de rotation, et le canal (11) présente une entrée pour du fluide de travail qui est reliée à la sortie de fluide de travail supplémentaire (7), et présente en outre une sortie qui est reliée au circuit externe de fluide de travail (4).

6. Machine hydrodynamique selon la revendication 5, **caractérisée en ce que** la roue de pompe (9.1) est supportée au moyen d'un palier à roulement et/ou d'un palier à glissement (13) qui est lubrifié avec le fluide de travail.

7. Machine hydrodynamique selon la revendication 6, caractérisée en ce qu11 est prévu pour le palier (13) un canal de lubrifiant (14) qui est relié au côté de refoulement de la pompe (9) de telle manière que le fluide de travail pompé hors de l'espace de travail (3) au moyen de la pompe (9) soit pompé dans le palier (13) pour lubrifier celui-ci.

8. Machine hydrodynamique selon l'une des revendications 1 à 7, **caractérisée en ce que** les alésages de sortie (6) sont orientés sensiblement dans le sens axial de la machine hydrodynamique, et la sortie de fluide de travail supplémentaire (7) est orientée selon un angle par rapport à ceux-ci et en particulier sensiblement dans le sens radial vers l'extérieur.

9. Machine hydrodynamique selon l'une des revendications 1 à 8, **caractérisée en ce que** la sortie de fluide de travail supplémentaire (7) débouche dans l'espace de travail (3) dans la zone du même diamètre ou sur le même diamètre de la machine hydrodynamique que les alésages de sortie (6).

10. Machine hydrodynamique selon l'une des revendications 1 à 9, **caractérisée en ce que** le canal annulaire (5) est disposé près de l'espace axial (3) dans le sens axial de la machine hydrodynamique et en particulier dans la même zone de diamètre que l'espace de travail (3).
